(19) Europäisches Patentamt
European Patent Office
Office européen des brevets

(11) EP 2 283 052 B1

(12) FASCICULE DE BREVET EUROPEEN

(45) Date de publication et mention de la délivrance du brevet:
**01.07.2015 Bulletin 2015/27**

(21) Numéro de dépôt: **09757714.2**

(22) Date de dépôt: **11.05.2009**

(51) Int Cl.:
***C08F 293/00*** (2006.01) ***C08L 53/00*** (2006.01)
***C08F 2/22*** (2006.01)

(86) Numéro de dépôt international:
**PCT/FR2009/050850**

(87) Numéro de publication internationale:
**WO 2009/147338 (10.12.2009 Gazette 2009/50)**

# (54) COPOLYMÈRE AMPHIPHILE À BLOCS, PROCÉDÉ POUR SA PRÉPARATION

AMPHIPHILE BLOCKCOPOLYMERE UND HERSTELLUNGSVERFAHREN DAFÜR

AMPHIPHILIC BLOCK COPOLYMER AND METHOD FOR PREPARING SAME

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.05.2008 FR 0802611**

(43) Date de publication de la demande:
**16.02.2011 Bulletin 2011/07**

(73) Titulaires:
- **Université Pierre et Marie Curie (Paris 6)
75005 Paris (FR)**
- **Université de Liège
4031 Angleur (BE)**
- **Centre National de la Recherche Scientifique
75016 Paris (FR)**

(72) Inventeurs:
- **CHARLEUX, Bernadette
F-94300 Vincennes (FR)**
- **RIEGER, Jutta
F-75014 Paris (FR)**
- **STOFFELBACH, François
F-94800 Villejuif (FR)**

(74) Mandataire: **Goulard, Sophie et al
Ipsilon Brema-Loyer
Le Centralis
63, avenue du Général Leclerc
92340 Bourg-la-Reine (FR)**

(56) Documents cités:
**EP-A- 1 801 137**
**FR-A- 2 910 475**
**US-A1- 2004 106 732**
**US-A1- 2005 165 476**
**US-A1- 2006 223 936**
**US-A1- 2007 054 816**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 283 052 B1

## Description

La présente invention concerne un procédé de préparation en milieu aqueux et en émulsion sans addition d'agent tensioactif, d'un copolymère amphiphile à blocs.

Les copolymères amphiphiles sont utiles dans de nombreux domaines techniques, en particulier dans le domaine des peintures, des vernis et des revêtements. Les compositions aqueuses, sans solvant organique, sont particulièrement recherchées, d'une part en raison du moindre coût de l'eau utilisée en tant que solvant par rapport aux solvants organiques, et d'autre part pour des problèmes de toxicité et de pollution inhérents à la plupart des solvants organiques.

Il est connu de préparer un copolymère amphiphile par une polymérisation assistée par un agent de transfert réversible par addition-fragmentation (RAFT), notamment en solution dans un solvant organique. Mais l'utilisation des solvants organiques ne répond plus aux critères actuels de non toxicité et de non pollution.

La préparation dans l'eau d'un (co)polymère à l'aide d'un agent RAFT peut être effectuée par une polymérisation en émulsion, mais il est alors nécessaire d'ajouter un agent tensio-actif, tel que le dodécylsulfate de sodium comme décrit par exemple dans la demande de brevet US 2004/0103732. Cependant, comme le (co)polymère obtenu est généralement introduit dans les compositions de peintures, de vernis ou de revêtement divers, directement sous la forme sous laquelle il est obtenu, sans purification, lesdites compositions contiennent l'agent tensio-actif libre, qui peut alors migrer lorsque les compositions sont déposées sur un substrat.

Une polymérisation de monomères hydrophobes en présence d'un agent RAFT peut être effectuée sans solvant (polymérisation dite « en masse »), mais le milieu réactionnel est alors très visqueux, au détriment de la vitesse de polymérisation et de l'homogénéité de la composition des (co)polymères obtenus.

Un procédé pour la préparation dans l'eau d'un copolymère amphiphile en présence d'un agent macro-RAFT est décrit par Ferguson, et al., [Macromolecules, 2005, 28(6), 2191-2204]. L'agent macro-RAFT est obtenu par réaction d'un agent RAFT en solution avec un monomère hydrophile (l'acide acrylique), en présence d'un amorceur de polymérisation radicalaire et de NaOH, en atmosphère exempte d'oxygène, sous agitation à 60°C pendant 2 heures. L'agent RAFT est un acide 2-{[(alkylsulfanyl)carbonothioyl]sulfanyl}propanoïque, dans lequel le groupe alkyle est un groupe butyle ou dodécyle. Lorsque le groupe alkyle est un butyle, la réaction peut être effectuée dans l'eau. Lorsque le groupe alkyle est un dodécyle, la solubilité de l'agent RAFT est trop faible et la réaction doit être effectuée dans un solvant organique. Le copolymère à blocs est obtenu par un procédé consistant à préparer une solution aqueuse contenant l'agent macro-RAFT, un amorceur de polymérisation radicalaire et NaOH, à 60°C, puis à ajouter par fractions successives le monomère hydrophobe (acrylate de n-butyle, acrylate d'éthyle ou styrène) destiné à former le bloc hydrophobe. L'addition du monomère est effectuée sur plus de 5 heures, de manière à maintenir la concentration en monomère dans le milieu réactionnel à une valeur inférieure à la concentration à saturation. L'addition du monomère hydrophobe par fractions complique le procédé et allonge la durée du processus.

La demande de brevet US 2006/0223936 décrit un procédé de préparation d'une dispersion aqueuse de particules de polymère comprenant les étapes suivantes : i) la préparation d'une dispersion ayant une phase aqueuse continue et une phase organique dispersée comprenant un ou plusieurs monomères à insaturation éthylénique et un agent amphiphile RAFT à titre d'agent stabilisant pour la phase organique, ii) la polymérisation du ou des monomères à insaturation éthylénique sous contrôle de l'agent RAFT pour former ladite dispersion aqueuse de particules de polymère.

Un procédé pour polymériser des monomères dans l'eau en présence d'un agent macro-RAFT est décrit par A. Martins dos Santos, et al. [Macromol. Rapid Comm., 2007, 28, 1325-1332]. L'agent macro-RAFT est du type "dithiobenzoate", et il est obtenu par réaction d'un poly(oxyde d'éthylène) ayant un groupe amino terminal avec le succinimido-4-[(phényl-1-thioxo)thio]-4-cyanopentanoate. Un copolymère à blocs amphiphile est préparé par un procédé au cours duquel l'agent macro-RAFT, le monomère hydrophobe et un amorceur de polymérisation radicalaire sont introduits dans l'eau, le milieu réactionnel est purgé pour éliminer l'oxygène, puis chauffé à 70°C. Ce procédé ne permet pas de contrôler la croissance des chaînes : on ne peut pas faire varier la masse molaire du polymère formé en fonction de la conversion en monomère ; il n'y a pas de relation directe entre la masse molaire moyenne en nombre et le rapport des concentrations initiales en monomère et en agent macro-RAFT ; la distribution des masses molaires est large et analogue à celle obtenue par un procédé classique de polymérisation en émulsion.

M. Manguian, et al., [Macromol. Rapid Commun. 2006, 27, 399-404] décrivent la préparation d'un agent macro-RAFT par réaction du 4-dithiobenzoate de l'acide 4-cyanopentanoïque (CPADB) avec le méthacrylate de diéthylaminoéthyle (DEAEMA), et son utilisation pour la préparation d'un copolymère à blocs amphiplile avec du styrène, dans l'eau, en présence d'un amorceur de polymérisation radicalaire, sans addition d'agent tensio-actif. Dans ce mode de réalisation également, la croissance des chaînes ne peut être contrôlée.

Le but de la présente invention est de proposer un procédé pour la préparation en émulsion dans l'eau d'un copolymère amphiphile, ledit procédé permettant de contrôler la masse molaire du copolymère obtenu et d'assurer la stabilité colloïdale, sans addition d'agent tensio-actif.

La présente invention a pour objet un procédé pour la préparation en émulsion en milieu aqueux d'un copolymère

amphiphile, ainsi que le copolymère obtenu et ses utilisations.

Le procédé selon l'invention consiste à :

- préparer une solution aqueuse d'un composé de formule (I) suivante :

$$R^1\text{-S-C(=S)-S-C}R^3R^4\text{-C(=O)-O}R^2 \qquad (I)$$

dans laquelle :

* $R^1$ représente un groupe alkyle linéaire ou ramifié, un groupe alkényle ayant une ou plusieurs liaisons -C=C-, ou un groupe alkynyle ayant une ou plusieurs liaisons -C=C- lesdits groupes ayant de 8 à 18 atomes de carbone ;
* $R^2$ représente un groupe $R^5$-[-O-$CH_2CH_2$-]$_n$- dans lequel $R^5$ est un groupe hydrophile et $20 \leq n \leq 150$ ;
* $R^3$ et $R^4$ représentent chacun indépendamment de l'autre H, un groupe alkyle ayant de 1 à 4 atomes de carbone ou un groupe nitrile, l'un au moins parmi $R^3$ et $R^4$ étant différent de H ; ladite solution aqueuse étant sans addition d'agent tensioactif

- ajouter à ladite solution successivement un ou plusieurs monomères hydrophobes de formule (II) suivante :

$$R^6\text{-C}R^7\text{=C}H_2 \qquad (II)$$

dans laquelle :

* $R^6$ représente un groupe phényle ou un groupe alkoxycarbonyle dans lequel le groupe alkoxy a de 1 à 8 atomes de carbone et porte éventuellement un ou plusieurs groupes fonctionnels, et
* $R^7$ représente un atome d'hydrogène ou un radical méthyle,

puis un amorceur de polymérisation radicalaire ; puis

- à porter ladite solution aqueuse à une température de 5-95°C pour la polymérisation du monomère hydrophobe.

Le choix de la température particulière dans l'intervalle 5-95°C et la durée du maintien à cette température dépend du monomère particulier utilisé. Ce choix est à la portée de l'homme de métier.

Le groupe hydrophile $R^5$ du composé de formule (I) peut être H ou un groupe -$(CH_2)_p$-$CH_2$-$R^8$ dans lequel p est 0 ou 1, et $R^8$ représente H ou un groupe choisi parmi -COOM, -$SO_3$M, -$OSO_3$M, -$N(CH_3)_2$ et -$N(CH_3)_3^+X^-$, M étant H ou un métal alcalin, X étant Cl, Br ou I.

Le composé de formule (I) $R^1$-S-C(=S)-S-C$R^3R^4$-C(=O)-O$R^2$ est l'agent macro-RAFT utilisé dans le procédé de l'invention. Il est obtenu par réaction en solution d'un acide 2-{[(alkylsulfanyl)carbonothioyl]sulfanyl}-2-méthyl-propanoïque, dans lequel le groupe alkyle a de 8 à 18 atomes de carbone, avec un oligomère d'oxyde d'éthylène en tant que segment hydrophile, dans un solvant organique. A titre d'exemple d'acide 2-{[(alkylsulfanyl)carbonothioyl]sulfanyl}-2-méthyl-propanoïque, on peut citer l'acide 2-{[(dodécylsulfanyl)carbonothioyl] sulfanyl}-2-méthyl propanoïque.

De préférence, la réaction est effectuée en milieu désoxygéné.

Le choix du rapport monomère hydrophobe/agent macro-RAFT permet d'ajuster la longueur du segment hydrophobe du copolymère à blocs. Ledit rapport, où les quantités sont exprimées en nombre de moles, est compris de préférence entre 20 et 1000 et plus particulièrement entre 20 et 500.

Le procédé de l'invention permet d'obtenir, sans addition d'agent tensio-actif, un copolymère amphiphile qui comprend un bloc hydrophile polyéther, et un bloc hydrophobe constitué par des unités récurrentes -$CH_2CR^6R^7$-. Ledit copolymère peut être représenté par la formule générale (III) suivante :

$$R^5\text{-O-[-C}H_2\text{C}H_2\text{-O-]}_{n}\text{-C(=O)-C}R^3R^4\text{-[C}H_2\text{C}R^6R^7]_m\text{-S-C(=S)-S-}R^1 \qquad (III)$$

dans laquelle $R^1$, $R^3$, $R^4$, $R^5$, $R^6$ et $R^7$ et n ont la signification donnée précédemment, et m est de 20 à 1000.

Le procédé de préparation conforme à la présente invention présente en outre l'avantage de pouvoir être réalisé en « batch » *ab initio,* c'est-à-dire en introduisant tous les composés nécessaires à la (co)polymérisation dans un réacteur (les composés de formule (I) et (II), l'eau et l'amorceur de polymérisation radicalaire), puis en laissant la (co)polymérisation procéder en une seule étape sans intervention extérieure.

Comme exemples particuliers de copolymères de formule (III), on peut citer les copolymères qui répondent aux formules suivantes, Ph étant un groupe phényle :

i) $CH_3-O-[-CH_2CH_2-O-]_n-C(=O)-C(CH_3)_2[CH_2-CHPh]_m-S-C-(=S)-S-C_{12}H_{25}$;

ii) $CH_3-O-[-CH_2CH_2-O-]_n-C(=O)-C(CH_3)_2[CH_2-CHPh]_{m1}-[CH_2CHCOOC_4H_9]_{m2}-S-C(=S)-S-C_{12}H_{25}$ dans laquelle m1 et m2, identiques ou différents, varient de 0 à 1000, avec $20 \leq m1 + m2 \leq 1000$ ;

iii) $CH_3-O-[-CH_2CH_2-O-]_n-C(=O)-C(CH_3)_2[CH_2-CHCOOC_4H_9]_m-S-C(=S)-S-C_{12}H_{25}$ ;

iv) $CH_3-O-[-CH_2CHrO-]_n-C(=O)-C(CH_3)_2[CH_2-CCH_3COOCH_3]_{m3}-[CH_2-CHCOOC_4H_9]_{m4}-S-C(=S)-S-C_{12}H_{25}$ dans laquelle m3 et m4, identiques ou différents, varient de 0 à 1000, avec $20 \leq m3 + m4 \leq 1000$ et $m3/(m3+m4) < 0,9$.

Le copolymère est obtenu sous forme d'un latex auto-stabilisé, c'est-à-dire d'une suspension colloïdale dans l'eau, de particules formées par une agglomération de macromolécules. Le coeur des particules est formé par le bloc hydrophobe et éventuellement une partie du bloc hydrophile du copolymère, et la surface des particules est recouverte par la totalité ou une partie seulement du bloc hydrophile du copolymère, ce qui assure la stabilisation colloïdale des particules dans l'eau.

Les copolymères obtenus par le procédé de l'invention sont particulièrement utiles pour dans le domaine des revêtements, c'est-à-dire des peintures et des vernis et dans le domaine des adhésifs.

Les copolymères sont en outre utiles comme additif dans diverses compositions, notamment comme agent dispersant de pigments, comme agent stabilisant pour des émulsions huile/eau ou eau/huile, ou comme agent stabilisant dans des mélanges de polymères.

La présente invention est décrite plus en détail à l'aide des exemples suivants,

Les exemples ont été effectués dans l'eau désionisée, à l'aide des produits de départs suivants :

ACPA Acide 4,4'-azobis-4-cyanopentanoïque (pureté >98%, Fluka) ;

DCC N,N'-dicyclohexylcarbodiimide (pureté >99%, Fluka) ;

DMPA 4-(diméthylamino)pyridine) (pureté >99%, Fluka) ;

MPOE $\alpha$-Méthoxy $\omega$-hydroxy poly(oxyde d'éthylène) ($M_n$ = 2000 $g.mol^{-1}$, Fluka), séché par distillation azéotropique avec du toluène sec ;

CPADB Acide 2-{[(dodécylsulfanyl)carbonothioyl]sulfanyl}-2-méthyl propanoïque ; préparé selon Lai, J. T., Filla, D., Shea, R. Macromolecules 2002, 35, 6754-6756 ;

DBTA 4-dithiobenzoate de l'acide 4-cyanopentanoïque, préparé selon Mitsukami, Y. ; Donovan, M. S. ; Lowe, A. B. ; McCormick, C. L. Macromolecules 2001, 34, 2248-2256 ;

ST Styrène (pureté > 99%, Fluka), distillé sous vide ;

*n*BA Acrylate de n-butyle (pureté >99%, Aldrich) distillé sous vide ;

MMA Méthacrylate de méthyle (pureté >99%, %, Aldrich) distillé sous vide.

Les produits obtenus ont été caractérisés par les méthodes suivantes.

Le taux de conversion du monomère a été déterminé par gravimétrie.

La masse molaire et l'indice de polymolécularité des (co)polymères ont été déterminés par chromatographie par exclusion stérique (SEC). Celle-ci a été effectuée à 40°C à l'aide de deux colonnes (PSS SDV linéaire MU 5 $\mu$m). Le tetrahydrofurane (THF) a été utilisé comme éluant, avec un débit de 1 $mL.min^{-1}$. La détection a été réalisée à l'aide d'un détecteur d'indice de réfraction différentiel LDC Analytical refractoMonitor IV. Les masses molaires moyennes ont été calculées à partir d'une courbe de calibrage basée sur des standards de polystyrène commercialisés par Polymer Standards Service.

Le diamètre moyen des particules ($D_z$) et la polydispersité des dispersions aqueuses diluées ont été mesurés par diffusion dynamique de la lumière (DLS) à 25°C, à l'aide de l'instrument Zetasizer Nano S90 de Malvern (90° angle, 5 mW He-Ne laser à 633 nm).

**Exemple 1**

Préparation d'un agent macro-RAFT

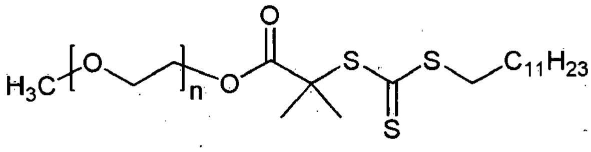

n=47

On a introduit une solution de 1,82 g de TTCA ($5 \times 10^{-3}$ mol), 1,03 g de DCC ($5 \times 10^{-3}$ mol) et 0,06 g de DMAP ($5 \times 10^{-4}$ mol) dans 40 mL de THF anhydre sous atmosphère d'azote dans un réacteur contenant 5 g de MPOE sec ($2,5 \times 10^{-3}$ mol). On a maintenu le milieu réactionnel à température ambiante sous agitation pendant 120 h, pour obtenir la réaction d'estérification suivante :

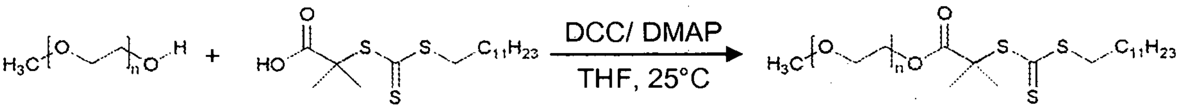


n=47 TTCA POE-TTC

Le polymère formé par estérification a été récupéré en précipitant le milieu réactionnel dans l'éther de diéthyle à froid. Après filtration, le produit obtenu a été séché sous vide à 40°C, puis conservé à 5-8°C. L'agent macro-RAFT, obtenu avec un rendement de 90%, a une masse molaire moyenne en nombre $M_n$ de 2420 g/mol. Sa teneur en groupe fonctionnel terminal $-S-C(=S)-S-C_{12}H_{25}$ est supérieure à 95%.

La pureté de l'agent macro-RAFT a été déterminée par spectrométrie RMN-$^1$H à l'aide d'un spectromètre Brücker à 500 MHz, dans $CDCl_3$ à température ambiante. Le spectre correspondant est représenté sur la figure 1 annexée, sur laquelle les déplacements chimiques suivants peuvent être identifiés :

0,86 ppm (t, 3H, $-CH_2\boldsymbol{CH_3}$ du groupe $C_{12}H_{25}$),

1,23 ppm (m, 18H, $-CH_2(\boldsymbol{CH_2})_9CH_3$ du groupe $C_{12}H_{25}$),

1,67 ppm (s, 6H, $-C(\boldsymbol{CH_3})_2-SC(S)S-$), 3,24 (t, 2H, $-SC(S)\boldsymbol{CH_2}CH_2-$ du groupe $C_{12}H_{25}$),

3,36 ppm (s, 3H, $\boldsymbol{CH_3}OCH_2-$ du groupe POE),

3,6 ppm (M, $CH_3O-(\boldsymbol{CH_2CH_2}O)_{n-1}-C\boldsymbol{H}_2CH_2-OC(O)C(CH_3)_2-$ du groupe PEO),

4,23 ppm (t, 2H, $-CH_2\boldsymbol{CH_2}-OC(O)C(CH_3)_2-$ du groupe POE).

**Exemple 2**

Préparation d'un copolymère à blocs POE-polystyrène

On a dissous dans 7,63 g d'eau désionisée, 0,1670 g (0,069 mmol) de POE-TTC obtenu selon l'exemple 1. Ensuite, on a ajouté 1,04 g (10,0 mmol) de styrène dans un flacon scellé de 25 mL. Dans ce milieu réactionnel, le styrène représente 11% en poids par rapport au poids total du milieu, et la concentration initiale en POE-TTC est de 7,5 $mmol.L^{-1}$.

On a préparé une solution aqueuse à 10 $mg.mL^{-1}$ d'ACPA que l'on a neutralisé par $NaHCO_3$ (3,5 équivalents molaire par rapport à ACPA). On a ajouté 0,48 mL de cette solution (soit 0,017 mmol d'ACPA) au mélange réactionnel contenu dans ledit flacon scellé, on a désoxygéné par bullage d'azote pendant 30 min à 3°C, puis on a immergé le flacon dans un bain d'huile thermostaté à 80°C. Les conditions de la réaction sont résumées dans le tableau 1, dans lequel :

- $[ACPA]_0$ désigne la concentration initiale en ACPA, en $mmol.L^{-1}$ de milieu réactionnel ;

- t désigne la durée de polymérisation, en heures ;
- C désigne le taux de conversion du monomère hydrophobe, exprimé en % ;
- $[ST]_0/[RAFT]_0$ désigne le rapport initial de monomère à l'agent RAFT, en nombre de moles ;
- $M_{n, th}$ désigne la masse molaire moyenne en nombre théorique, au taux de conversion expérimental indiqué ;
- $M_{n, exp}$ désigne la masse molaire moyenne en nombre, calculée à partir de l'analyse du polymère par SEC ;
- $M_w/M_n$ représente le rapport de la masse molaire moyenne en poids à la masse molaire moyenne en nombre ;
- $D_z$, exprimé en nm, désigne le diamètre moyen des particules. L'indice de dispersité est indiqué entre parenthèses. Un faible indice indique une distribution étroite des tailles de particules ;
- $N_p$ désigne le nombre de particules par gramme de latex calculé à partir de la gravimétrie, par l'équation suivante :

$$N_p = \frac{6 \cdot \tau}{\pi \cdot D_z^{\ 3} \cdot d_p},$$

dans laquelle $\tau$ est la masse de polymère par gramme de latex [$g.g^{-1}{}_{latex}$] et dp est la densité du polymère à 25°C, à savoir 1,05 $g.cm^{-3}$ pour le polystyrène, et 1,055 $g.cm^{-3}$ pour P*n*BuA.

On a prélevé des échantillons à intervalles réguliers, afin de suivre par gravimétrie, le taux de conversion du monomère, ainsi que l'évolution du diamètre moyen des particules et la masse molaire en fonction du taux de conversion.

La figure 2 annexée représente le taux de conversion du monomère (en %), en fonction du temps (en heures).

La figure 3 annexée représente, en fonction du taux de conversion donné en abscisse, la masse molaire moyenne en nombre $M_n$ (représentée par les carrés), et l'indice de polymolécularité $M_w/M_n$ (représenté par les triangles ; $M_n$ est la masse molaire moyenne en nombre ; $M_w$ est la masse molaire moyenne en poids ; les deux valeurs sont calculées à partir de l'analyse des polymères par SEC). La ligne droite représente la masse moléculaire moyenne théorique en fonction du taux de conversion.

La figure 4 annexée représente l'évolution des chromatogrammes d'exclusion stérique en fonction du taux de conversion.

Ces figures montrent que :

i) la polymérisation du styrène est contrôlée en ce sens qu'on observe une variation linéaire de la masse molaire moyenne en nombre, $M_n$, avec la conversion en monomère et des indices de polymolécularité faibles (nettement inférieurs à 1,5) ;

ii) la totalité de l'agent macro-RAFT POE-TTC a réagi car on observe que les valeurs de $M_n$ sont en bon accord avec la droite théorique, c'est-à-dire avec la valeur théorique de $M_n$ calculée à une conversion donnée par le rapport de la masse de polymère formée sur le nombre de moles d'agent macro-RAFT introduit.

A titre comparatif, on a reproduit le mode opératoire de l'exemple 2 en remplaçant l'agent macro-RAFT de l'exemple 1 par le POE-DTB qui répond à la formule suivante :

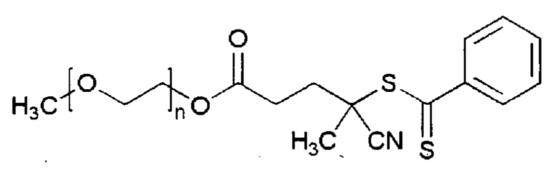

n = 47

Les conditions opératoires sont données dans le tableau 1. Il apparaît clairement que, pour une durée de réaction équivalente (une vingtaine d'heures), le taux de conversion du monomère hydrophobe n'est que de 26% si le POE-DTB est utilisé, alors qu'il est de 67% si l'agent macro-RAFT de l'exemple 1 est utilisé.

**Tableau 1**

| RAFT | $[ACPA]_0$ | $[ST]_0/[RAFT]_0$ | t | C | $M_{n, th}$ | $M_{n}$, exp | $M_w/M_n$ | $D_z$ (dispersité) | $N_p$ |
|---|---|---|---|---|---|---|---|---|---|
| POE-TTC | 1,6 | 145 | 22,7 | 67 | 12,5 | 12,2 | 1,16 | 260 (0,16) | $9{,}7\times10^{12}$ |
| POE-DTB | 2,0 | 143 | 23,3 | 26 | | | | | |

**Exemple 3**

Préparation d'un copolymère à blocs POE-b-poly(acrylate de *n*-butyle)

Echantillon A2

On a dissous dans 7,63 g d'eau désionisée, 0,1670 g (0,069 mmol) de POE-TTC obtenu selon l'exemple 1. Ensuite, on a ajouté 1,28 g (10 mmol) d'acrylate de n-butyle dans un flacon scellé de 25 mL. Dans ce milieu réactionnel, le styrène représente 13% en poids et la concentration initiale en POE-TTC est de 7,1 mmol.$L^{-1}$.

On a préparé une solution aqueuse à 10 mg.$mL^{-1}$ d'ACPA que l'on a neutralisée par $NaHCO_3$ (3,5 équivalents molaires par rapport à ACPA). On a ajouté 0,48 mL de cette solution (soit 0,017 mmol d'ACPA) au mélange réactionnel contenu dans ledit flacon scellé, on a désoxygéné par bullage d'azote pendant 30 min à 3°C, puis on a immergé le flacon dans un bain d'huile thermostaté à 70°C.

Echantillons A1, A3 et A4

On a reproduit le mode opératoire de l'échantillon A2, avec des quantités différentes de monomère hydrophobe. Dans les échantillons A1, A2 et A3, la concentration en agent macro-RAFT a été maintenue quasiment constante et on a modifié la concentration en monomère hydrophobe. Lorsque le rapport monomère/agent macro-RAFT augmente, la longueur du segment hydrophobe augmente, comme prévu, de même que le diamètre des particules de latex (de 89 nm à 510 nm), et le nombre de particules diminue de manière substantielle. Dans l'échantillon A4, on a augmenté la concentration en agent macro-RAFT POE-TTC par rapport à l'expérience A3.

On a également reproduit le mode opératoire dans les conditions de l'échantillon A2, en remplaçant l'agent macro-RAFT POE-TTC par l'agent macro-RAFT POE-DTB utilisé à titre comparatif dans l'exemple 2. Cet essai comparatif est désigné par X2.

Les conditions des divers essais sont rassemblées dans le tableau 2, dans lequel :

- la colonne *n*BA indique le pourcentage en poids représenté par le monomère dans le mélange réactionnel ;
- la colonne $[ACPA]_0$ donne la concentration initiale en ACPA dans le milieu réactionnel initial, en mmol.$L^{-1}$ ;
- la colonne t donne la durée de conversion, en heures ;
- la colonne C donne le taux de conversion du monomère *n*BA, en % ;
- la colonne $[nBA]_0/[RAFT]_0$ désigne le rapport molaire initial de monomère *n*Ba à l'agent macro-RAFT ;
- la colonne $M_{n, th}$ donne la masse molaire moyenne en nombre théorique, au taux de conversion expérimental indiqué ;
- la colonne $M_{n, exp}$ donne la masse molaire moyenne en nombre, calculée à partir de l'analyse du polymère par SEC ;
- la colonne $M_w/M_n$ donne le rapport de la masse molaire moyenne en poids à la masse molaire moyenne en nombre ;
- la colonne $D_z$, exprimé en nm, donne le diamètre moyen des particules. L'indice de dispersité est indiqué entre parenthèses. Un faible indice indique une distribution étroite des tailles de particules ;
- la colonne $N_p$ donne le nombre de particules par gramme de latex calculé à partir de la gravimétrie, par l'équation donnée pour l'exemple 2.

On a prélevé des échantillons à intervalles réguliers, afin de suivre par gravimétrie, le degré de conversion du

monomère, ainsi que l'évolution du diamètre moyen des particules et la masse molaire en fonction du degré de conversion.

La figure 5 annexée représente le taux de conversion du monomère (en %), en fonction du temps (en heures). Les losanges correspondent à l'échantillon A4 et les triangles à l'échantillon A3.

La figure 6 annexée représente, en fonction du taux de conversion donné en abscisse, la masse molaire moyenne en nombre $M_n$ (représentée par les losanges et les triangles pleins), et l'indice de polymolécularité $M_w/M_n$ (représenté par les losanges et les triangles vides). La ligne droite représente la masse molaire moyenne théorique en fonction du taux de conversion.

La figure 7 annexée représente l'évolution des chromatogrammes d'exclusion stérique en fonction du taux de conversion.

Ces résultats montrent d'une part que la polymérisation de l'acrylate de n-butyle est particulièrement rapide et quasi complète, et d'autre part qu'on a pu atteindre 23% en poids de polymère (échantillon A4) ou 24% en poids de polymère (échantillon A3) sans déstabilisation du latex (échantillon A4) en conditions « batch », c'est-à-dire en ajoutant tous les réactifs dans le réacteur au début de la réaction. Ils montrent également la nette supériorité de l'agent macro-RAFT utilisé dans la présente invention, par rapport à l'agent macro-RAFT POE-DTB.

**Tableau 2**

| Ech. | A1 | A2 | A3 | A4 | X2 |
|---|---|---|---|---|---|
| *n*BA | 9 | 13 | 24 | 23 | 14 |
| $[POE\text{-}TTC]_0$ | 8,1 | 7,1 | 7,0 | 14,2 | 7,2 |
| $[ACPA]_0$ | 1,6 | 1,8 | 1,4 | 3,0 | 1,8 |
| $[monomère]_0$ /$[POE\text{-}TTC]_0$ | 90 | 145 | 262 | 130 | 149 |
| t | 20,0 | 7,0 | 3,7 | 5,1 | 30,3 |
| C | 66 | 96 | 96 | 99 | 4 |
| $M_{n,th}$ | 10,0 | 20,3 | 34,6 | 18,8 | |
| $M_{n, exp}$ | 9,9 | 22,2 | 33,8 | 18,9 | |
| $M_w/M_n$ | 1,41 | 1,26 | 1,24 | 1,21 | |
| $D_z$ (nm) (dispersité) | 89 (0,05) | 200 (0,04) | 510 (0,09) | 220(0,02) | |
| $N_p$ | $2,1\times10^{14}$ | $3,3\times10^{13}$ | $3,4\times10^{12}$ | $4,5\times10^{13}$ | |

**Exemple 4**

<u>Préparation d'un copolymère à blocs POE-*b*-poly(méthacrylate de méthyle)-*co*-poly(acrylate de *n*-butyle)</u>

0,167 g ($M_n$ = 2420 g.mol$^{-1}$, soit 6,9 $\times$ 10$^{-5}$ mol) d'agent macro-RAFT POE-TTC obtenu selon l'exemple 1 ont été dissous dans 3,666 g d'eau désionisée dans un flacon scellé de 25 mL. On a préparé une solution aqueuse à 8 mg.mL$^{-1}$ d'ACPA que l'on a neutralisée par $NaHCO_3$ (3,5 équivalents molaires par rapport à ACPA). On a ajouté 0,5 mL (4,0 mg, 1,4 $\times$ 10$^{-5}$ mol) de cette solution à la solution de POE-TTC. On a ensuite ajouté au mélange contenu dans ledit flacon scellé, 0,575 g (4,5 $\times$ 10$^{-3}$ mol) de *n*BA et 0,459 g de MMA (4,6 $\times$ 10$^{-3}$ mol). Le mélange réactionnel a été désoxygéné par bullage d'azote pendant 30 min. à 3°C, puis on a immergé le flacon dans un bain d'huile thermostaté à 70°C.

On a prélevé des échantillons à intervalles réguliers, afin de suivre par gravimétrie, le taux de conversion du monomère, ainsi que l'évolution du diamètre moyen des particules et la masse molaire en fonction du taux de conversion.

Après 5,4 h de polymérisation, la conversion globale des monomères s'élève à 92%. Un latex stable composé de particules de 125 nm (facteur de dispersité = 0,04) est obtenu.

La figure 8 annexée montre l'évolution des chromatogrammes d'exclusion stérique avec la conversion : ils se déplacent avec la conversion et la disparition complète du pic initial de l'agent macro-RAFT (PEO-TTC) est observée, indiquant la consommation totale de ce dernier.

La figure 9 annexée représente, en fonction du taux de conversion donné en abscisse, la masse molaire moyenne en nombre $M_n$ (représentée par les losanges pleins), et l'indice de polymolécularité $M_w/M_n$ (représenté par les losanges vides). La ligne droite représente la masse molaire moyenne théorique en fonction du taux de conversion. On observe une variation linéaire de $M_n$ avec la conversion et un bon accord avec les masses attendues. Ces résultats montrent que la copolymérisation de l'acrylate de n-butyle et du méthacrylate de méthyle peut être contrôlée en émulsion

aqueuse dans des conditions batch *ab initio* en présence de l'agent macro-RAFT décrit dans l'exemple 1. Des latex acryliques auto-stabilisés peuvent être obtenus par ce procédé simple ne nécessitant pas l'ajout de tensioactif conventionnel.

## Revendications

1. Procédé pour la préparation en émulsion en milieu aqueux d'un copolymère amphiphile, **caractérisé en ce qu'**il consiste à :

   - préparer une solution aqueuse d'un composé de formule (I) suivante :

   $$R^1\text{-S-C(=S)-S-CR}^3R^4\text{-C(=O)-OR}^2 \qquad (I)$$

   dans laquelle :

   * $R^1$ représente un groupe alkyle linéaire ou ramifié, un groupe alkényle ayant une ou plusieurs liaisons -C=C-, ou un groupe alkynyle ayant une ou plusieurs liaisons -C≡C- lesdits groupes ayant de 8 à 18 atomes de carbone ;
   * $R^2$ représente un groupe $R^5$-[-O-$CH_2CH_2$-]$_n$- dans lequel $R^5$ est un groupe hydrophile et $20 \leq n \leq 150$ ;
   * $R^3$ et $R^4$ représentent chacun indépendamment de l'autre H, un groupe alkyle ayant de 1 à 4 atomes de carbone ou un groupe nitrile, l'un au moins parmi $R^3$ et $R^4$ étant différent de H ; ladite solution aqueuse étant sans addition d'agent tensio-actif,

   - ajouter à ladite solution successivement un ou plusieurs monomères hydrophobes de formule (II) suivante :

   $$R^6\text{-CR}^7\text{=CH}_2 \qquad (II)$$

   dans laquelle :

   * $R^6$ représente un groupe phényle ou un groupe alkoxycarbonyle dans lequel le groupe alkyloxy a de 1 à 8 atomes de carbone et portant éventuellement un ou plusieurs groupes fonctionnels, et
   * $R^7$ représente un atome d'hydrogène ou un radical méthyle,

   puis un amorceur de polymérisation radicalaire ; puis
   - à porter ladite solution aqueuse à une température de 5-95°C.

2. Procédé selon la revendication 1, **caractérisé en ce que** le groupe hydrophile $R^5$ du composé de formule (I) est H ou un groupe -$(CH_2)_p$-$CH_2$-$R^8$ dans lequel p est 0 ou 1, et $R^8$ représente H ou un groupe choisi parmi -COOM, -$SO_3$M, -$OSO_3$M, -$N(CH_3)_2$ et -$N(CH_3)_3^+X^-$, M étant H ou un métal alcalin, X étant Cl, Br ou I.

3. Procédé selon la revendication 1, **caractérisé en ce que** le rapport molaire monomère hydrophobe/composé I est compris entre 20 et 1000.

4. Copolymère amphiphile à blocs de formule suivante (III), qui est préparé selon le procédé d'une des revendications 1 à 3 :

   $$R^5\text{-O-[-CH}_2\text{CH}_2\text{-O-]}_n\text{-C(=O)-CR}^3R^4\text{-[CH}_2\text{CR}^6R^7]_m\text{-S-C(=S)-S-R}^1 \qquad (III)$$

   dans laquelle :

   * $R^1$ représente un groupe alkyle linéaire ou ramifié, un groupe alkényle ayant une ou plusieurs liaisons -C=C-, ou un groupe alkynyle ayant une ou plusieurs liaisons -C=C-, lesdits groupes ayant de 8 à 18 atomes de carbone ;
   * $R^3$ et $R^4$ représentent chacun indépendamment de l'autre H, un groupe alkyle ayant de 1 à 4 atomes de carbone ou un groupe nitrile, l'un au moins parmi $R^3$ et $R^4$ étant différent de H ;
   * $R^5$ est un groupe hydrophile ;
   * $R^6$ représente un groupe phényle ou un groupe alkoxycarbonyle dans lequel le groupe alkyloxy a de 1 à 8 atomes de carbone,

* $R^7$ représente un atome d'hydrogène ou un radical méthyle ;
* $20 \leq n \leq 150$, et
* $20 \leq m \leq 1000$.

5. Copolymère selon la revendication 4, **caractérisé en ce que** le groupe hydrophile $R^5$ est H ou un groupe $-(CH_2)_p-CH_2-R^8$ dans lequel p est 0 ou 1, et $R^8$ représente H ou un groupe choisi parmi -COOM, $-SO_3M$, $-OSO_3M$, $-N(CH_3)_2$ et $-N(CH_3)_3{}^+X^-$, M étant H ou un métal alcalin, X étant Cl, Br ou I.

6. Copolymère selon la revendication 4, **caractérisé en ce qu'**il répond à l'une des formules suivantes, Ph désignant un groupe phényle :

i) $CH_3-O-[-CH_2CH_2-O-]_n-C(=O)-C(CH_3)_2[CH_2-CHPh]_m-S-C(=S)-S-C_{12}H_{25}$ ;
ii) $CH_3-O-[-CH_2CH_2-O-]_n-C(=O)-C(CH_3)_2[CH_2-CHPh]_{m1}-[CH_2-CHCOOC_4H_9]_{m2}-S-C(=S)-S-C_{12}H_{25}$ dans laquelle m1 et m2, identiques ou différents, varient de 0 à 1000, avec $20 \leq m1 + m2 \leq 1000$;
iii) $CH_3-O-[-CH_2CH_2-O-]_n-C(=O)-C(CH_3)_2[CH_2-CHCOOC_4H_9]_m-S-C(=S)-S-C_{12}H_{25}$ ;
iv) $CH_3-O-[-CH_2CH_2-O-]_n-C(=O)-C(CH_3)_2[CH_2-CCH_3COOCH_3]_{m3}-[CH_2-CHCOOC_4H_9]_{m4}-S-C(=S)-S-C_{12}H_{25}$ dans laquelle m3 et m4, identiques ou différents, varient de 0 à 1000, avec $20 \leq m3 + m4 \leq 1000$ et $m3/(m3+m4) < 0,9$.

7. Latex auto-stabilisé, constitué par une suspension colloïdale dans l'eau, de particules formées par une agglomération de molécules de copolymère selon l'une des revendications 4 à 6, le coeur des particules étant formé par le bloc hydrophobe et éventuellement une partie des blocs hydrophiles du copolymère, et la surface des particules est recouverte par la totalité ou une partie seulement des blocs hydrophiles du copolymère.

**Patentansprüche**

1. Verfahren für die Herstellung eines amphiphilen Copolymers in Emulsion in wässrigem Medium, **dadurch gekennzeichnet, dass** es besteht im:

- Vorbereiten einer wässrigen Lösung einer Verbindung der folgenden Formel (I):

$$R^1-S-C(=S)-S-CR^3R^4-C(=O)-OR^2 \qquad (I)$$

in welcher:

* $R^1$ eine lineare oder verzweigte Alkylgruppe, eine Alkenylgruppe mit einer oder mehreren Bindungen -C=C- oder eine Alkynylgruppe mit einer oder mehreren Bindungen -C=C- darstellt, wobei die Gruppen 8 bis 18 Kohlenstoffatomen haben,
* $R^2$ eine Gruppe $R^5-[-O-CH_2CH_2-]_n-$ darstellt, in welcher $R^5$ eine hydrophile Gruppe ist und $20 \leq n \leq 150$,
* $R^3$ und $R^4$ jeweils unabhängig voneinander H, ein Alkylgruppe mit 1 bis 4 Kohlenstoffatomen oder eine Nitrilgruppe darstellen, wobei mindestens eins von $R^3$ und $R^4$ von H unterschiedlich ist; wobei die wässrige Lösung ohne Hinzufügen von Tensid ist,

- schrittweises Hinzufügen zu der Lösung eines oder mehrerer hydrophober Monomere der folgenden Formel (II):

$$R^6-CR^7=CH_2 \qquad (II)$$

in welcher:

* $R^6$ eine Phenylgruppe oder eine Alkoxycarbonylgruppe darstellt, in welcher die Alkyloxygruppe 1 bis 8 Kohlenstoffatome hat und eventuell eine oder mehrere Funktionsgruppen trägt, und
* $R^7$ ein Wasserstoffatom oder ein Methylradikal darstellt,

danach einen Initiator einer Radikalpolymerisation; danach
- Bringen der wässrigen Lösung auf eine Temperatur von 5-95 °C.

2. Verfahren nach Anspruch 1, **dadurch gekennzeichnet, dass** die hydrophile Gruppe $R^5$ der Verbindung der Formel

(I) H oder eine Gruppe $-(CH_2)_P-CH_2-R^8$ ist, in welcher p 0 oder 1 ist, und $R^8$ H oder eine Gruppe darstellt, die aus $-COOM$, $-SO_3M$, $-OSO_3M$, $-N(CH_3)_2$ und $-N(CH_3)_3^+X^-$ ausgewählt ist, wobei M H oder ein alkalisches Metall ist, wobei X Cl, Br oder I ist.

**3.** Verfahren nach Anspruch 1, **dadurch gekennzeichnet, dass** das molare Verhältnis hydrophobes Monomer/Verbindung I zwischen 20 und 1000 inklusive ist.

**4.** Amphiphiles Block-Copolymer der folgenden Formel (III), das nach dem Verfahren einer der Ansprüche 1 bis 3 hergestellt wird:

$$R^5-O-[-CH_2CH_2-O-]_n-C(=O)-CR^3R^4-[CH_2CR^6R^7]_m-S-C(=S)-S-R^1 \qquad (III)$$

in welcher:

* $R^1$ eine lineare oder verzweigte Alkylgruppe, eine Alkenylgruppe mit einer oder mehreren Bindungen -C=C- oder eine Alkynylgruppe mit einer oder mehreren Bindungen -C=C- darstellt, wobei die Gruppen 8 bis 18 Kohlenstoffatomen haben,
* $R^3$ und $R^4$ jeweils unabhängig voneinander H, ein Alkylgruppe mit 1 bis 4 Kohlenstoffatomen oder eine Nitrilgruppe darstellen, wobei mindestens eins von $R^3$ und $R^4$ von H unterschiedlich ist,
* $R^5$ eine hydrophile Gruppe ist,
* $R^6$ eine Phenylgruppe oder eine Alkoxycarbonylgruppe darstellt, in welcher die Alkyloxygruppe 1 bis 8 Kohlenstoffatome hat,
* $R^7$ ein Wasserstoffatom oder ein Methylradikal darstellt,
* $20 \leq n \leq 150$, und
* $20 \leq m \leq 1000$.

**5.** Copolymer nach Anspruch 4, **dadurch gekennzeichnet, dass** die hydrophile Gruppe $R^5$ H oder eine Gruppe $-(CH_2)_P-CH_2-R^8$ ist, in welcher p 0 oder 1 ist, und $R^8$ H oder eine Gruppe darstellt, die aus $-COOM$, $-SO_3M$, $-OSO_3M$, $-N(CH_3)_2$ und $-N(CH_3)_3^+X^-$ ausgewählt ist, wobei M H oder ein alkalisches Metall ist, wobei X Cl, Br oder I ist.

**6.** Copolymer nach Anspruch 4, **dadurch gekennzeichnet, dass** es einer der folgenden Formeln entspricht, wobei Ph eine Phenylgruppe bezeichnet:

i) $CH_3-O-[-CH_2CH_2-O-]_n-C(=O)-C(CH_3)_2[CH_2-CHPh]_m-S-C(=S)-S-C_{12}H_{25}$;
ii) $CH_3-O-[-CH_2CH_2-O-]_n-C(=O)-C(CH_3)_2[CH_2-CHPh]_{m1}-[CH_2-CHCOOC_4H_9]_{m2}-S-C(=S)-S-C_{12}H_{25}$, in welcher m1 und m2, identisch oder unterschiedlich, von 0 bis 1000 schwanken, mit $20 \leq m1 + m2 \leq 1000$;
iii) $CH_3-O-[-CH_2CH_2-O-]_n-C(=O)-C(CH_3)_2[CH_2-CHCOOC_4H_9]_m-S-C(=S)-S-C_{12}H_{25}$;
iv) $CH_3-O-[-CH_2CH_2-O-]_n-C(=O)-C(CH_3)_2[CH_2-CCH_3COOCH_3]_{m3}-[CH_2-CHCOOC_4H_9]_{m4}-S-C(=S)-S-C_{12}H_{25}$, in welcher m3 und m4, identisch oder unterschiedlich, von 0 bis 1000 schwanken, mit $20 \leq m3 + m4 \leq 1000$ und $m3/(m3+m4) < 0,9$.

**7.** Autostabilisierter Latex, der aus einer kolloidalen Suspension in Wasser von Partikeln besteht, die aus einer Agglomeration von Copolymermolekülen nach einem der Ansprüche 4 bis 6 gebildet ist, wobei das Herz der Partikel von dem hydrophoben Block und eventuell einem Teil der hydrophylen Blöcke des Copolymers gebildet ist, und die Oberfläche der Partikel von der Gesamtheit oder nur einem Teil der hydrophylen Blöcke des Copolymers bedeckt ist.

## Claims

**1.** A method for preparing an amphiphilic copolymer, in emulsion in an aqueous medium, **characterized in that** it consists in:

- preparing an aqueous solution of a compound of formula (I) below:

$$R^1-S-C(=S)-S-CR^3R^4-C(=O)-OR^2 \qquad (I)$$

in which:

* $R^1$ represents a linear or branched alkyl group, an alkenyl group having one or more -C=C- bonds, or an alkynyl group having one or more -C=C-bonds, said groups having from 8 to 18 carbon atoms;
* $R^2$ represents an $R^5$-[-O-$CH_2CH_2$-]$_n$- group in which $R^5$ is a hydrophilic group and $20 \leq n \leq 150$;
* $R^3$ and $R^4$ each represent, independently of one another, H, an alkyl group having from 1 to 4 carbon atoms or a nitrile group, at least one among $R^3$ and $R^4$ being other than H; said aqueous solution being without the addition of surfactant,

- successively adding to said solution one or more hydrophobic monomers of formula (II) below:

$$R^6\text{-}CR^7\text{=}CH_2 \qquad \text{(II)}$$

in which:

* $R^6$ represents a phenyl group or an alkoxycarbonyl group in which the alkoxy group has from 1 to 8 carbon atoms and optionally bearing one or more functional groups, and
* $R^7$ represents a hydrogen atom or a methyl radical,

then a free-radical polymerization initiator; and then
- in bringing said aqueous solution to a temperature of 5-95°C.

**2.** The method as claimed in claim 1, **characterized in that** the hydrophilic group $R^5$ of the compound of formula (I) is H or a $-(CH_2)_p-CH_2-R^8$ group in which p is 0 or 1, and $R^8$ represents H or a group chosen from -COOM, $-SO_3M$, $-OSO_3M$, $-N(CH_3)_2$ and $-N(CH_3)_3^+X^-$, M being H or an alkali metal, X being Cl, Br or I.

**3.** The method as claimed in claim 1, **characterized in that** the hydrophobic monomer/compound I molar ratio is between 20 and 1000.

**4.** An amphiphilic block copolymer of formula (III) below, prepared according to the method of one of claims 1 to 3:

$$R^5\text{-O-[-}CH_2CH_2\text{-O-]}_n\text{-C(=O)-}CR^3R^4\text{-[}CH_2CR^6R^7\text{]}_m\text{-S-C(=S)-S-}R^1 \qquad \text{(III)}$$

in which:

* $R^1$ represents a linear or branched alkyl group, an alkenyl group having one or more -C=C- bonds, or an alkynyl group having one or more -C=C-bonds, said groups having from 8 to 18 carbon atoms;
* $R^3$ and $R^4$ each represent, independently of one another, H, an alkyl group having from 1 to 4 carbon atoms or a nitrile group, at least one among $R^3$ and $R^4$ being other than H;
* $R^5$ is a hydrophilic group;
* $R^6$ represents a phenyl group or an alkoxycarbonyl group in which the alkyloxy group has from 1 to 8 carbon atoms;
* $R^7$ represents a hydrogen atom or a methyl radical;
* $20 \leq n \leq 150$; and
* $20 \leq m \leq 1000$.

**5.** The copolymer as claimed in claim 4, **characterized in that** the hydrophilic group $R^5$ is H or a $-(CH_2)_p-CH_2-R^8$ group in which p is 0 or 1, and $R^8$ represents H or a group chosen from -COOM, $-SO_3M$, $-OSO_3M$, $-N(CH_3)_2$ and $-N(CH_3)_3^+X^-$, M being H or an alkali metal, X being Cl, Br or I.

**6.** The copolymer as claimed in claim 4, **characterized in that** it corresponds to one of the following formulae, Ph denoting a phenyl group:

i) $CH_3\text{-O-[-}CH_2CH_2\text{-O-]}_n\text{-C(=O)-C}(CH_3)_2[CH_2\text{-CHPh}]_m\text{-S-C(=S)-S-}C_{12}H_{25}$;
ii) $CH_3\text{-O-[-}CH_2CH_2\text{-O-]}_n\text{-C(=O)-C}(CH_3)_2[CH_2\text{-CHPh}]_{m1}\text{-[}CH_2\text{-CHCOO}C_4H_9]_{m2}\text{-S-C(=S)-S-}C_{12}H_{25}$ in which m1 and m2, which may be identical or different, range from 0 to 1000, with $20 \leq m1 + m2 \leq 1000$;
iii) $CH_3\text{-O-[-}CH_2CH_2\text{-O-]}_n\text{-C(=O)-C}(CH_3)_2[CH_2\text{-CHCOO}C_4H_9]_m\text{-S-C(=S)-S-}C_{12}H_{25}$ ;
iv) $CH_3\text{-O-[-}CH_2CH_2\text{-O-]}_n\text{-C(=O)-C}(CH_3)_2[CH_2\text{-CC}H_3\text{COOC}H_3]_{m3}\text{-[}CH_2\text{-CHCOO}C_4H_9]_{m4}\text{-S-C(=S)-S-}C_{12}H_{25}$ in which m3 and m4, which may be identical or different, range from 0 to 1000, with $20 \leq m3 + m4 \leq 1000$ and $m3/(m3+m4) < 0.9$.

7. A self stabilizing latex, constituted of a colloidal suspension in water, of particles formed by aggregation of molecules of copolymer as claimed in one of claims 4 to 6, the core of the particles being formed by the hydrophobic block and, optionally, a part of the hydrophilic blocks of the copolymer, and the surface of the particles being covered with all or only a part of the hydrophilic blocks of the copolymer.

**Figure 1**

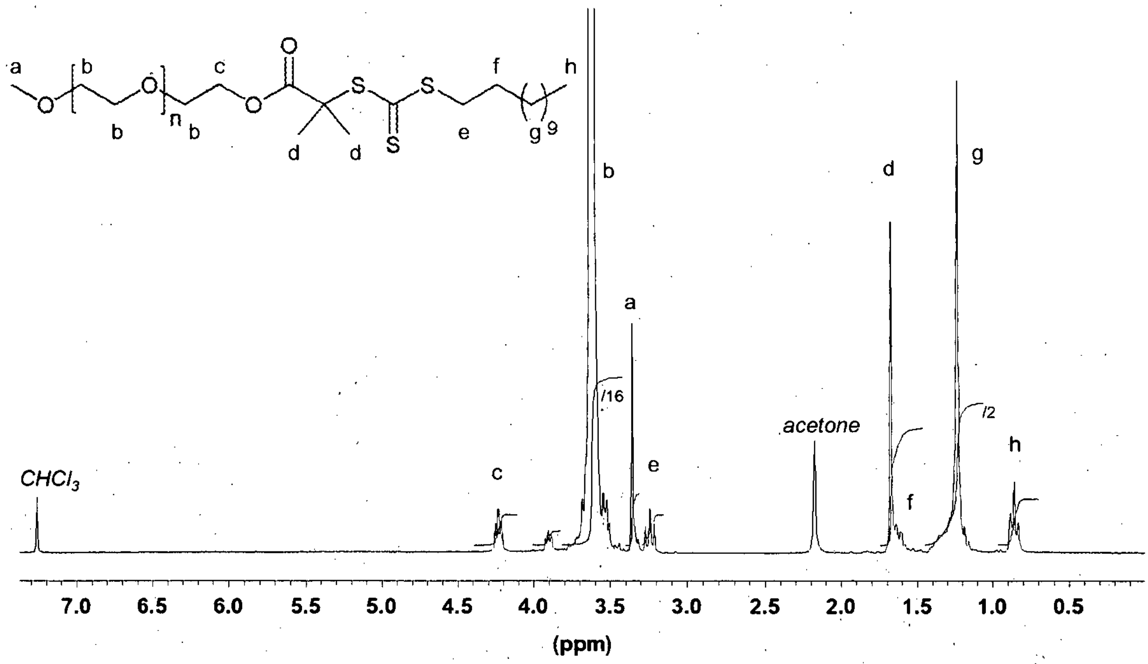


**Figure 2**

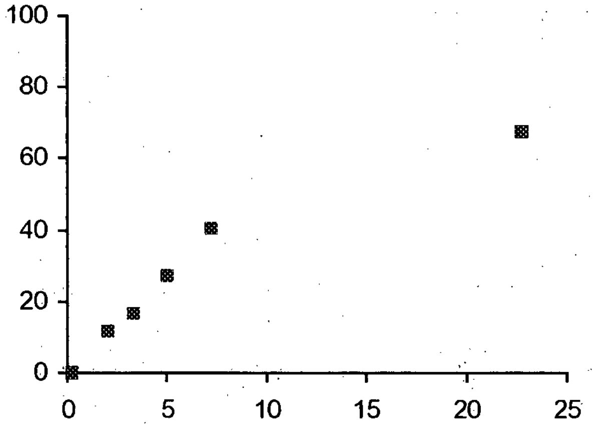

**Figure 3**

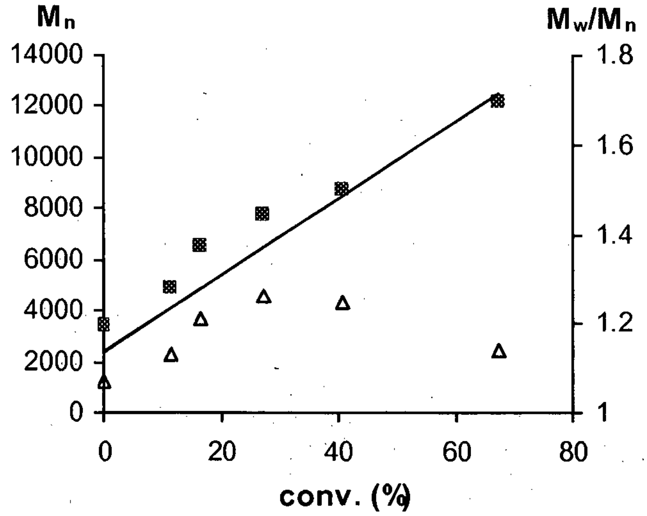


**Figure 4**

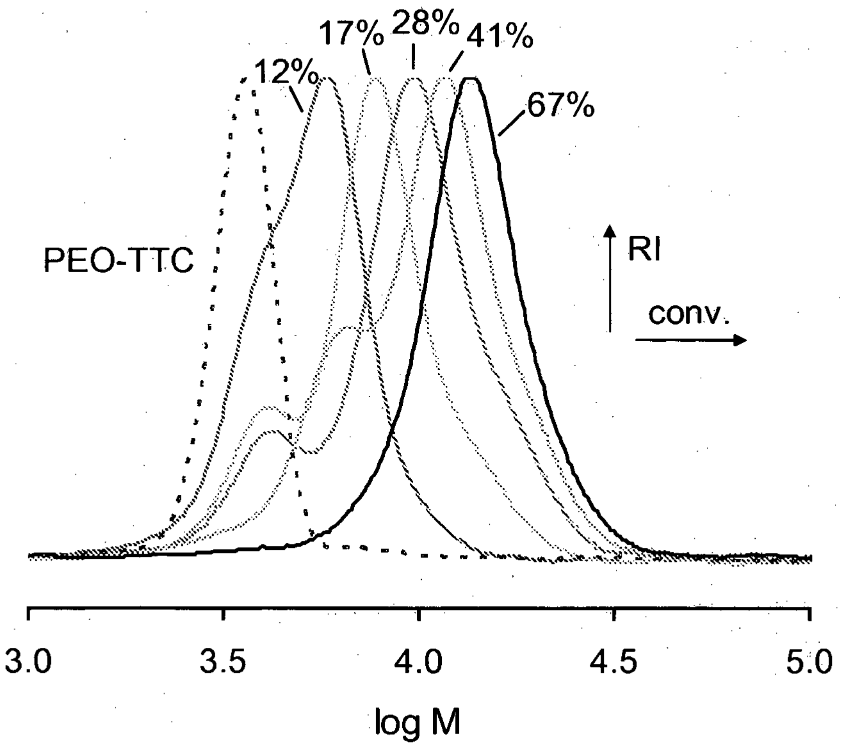

Figure 5

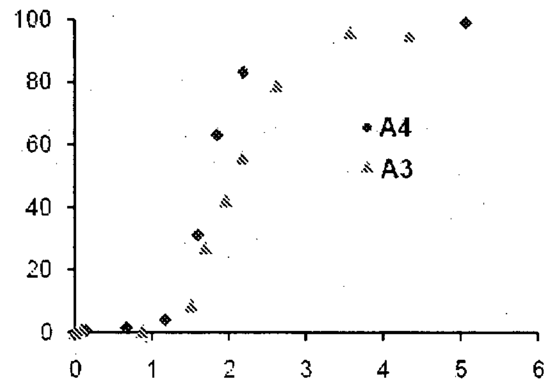


Figure 6

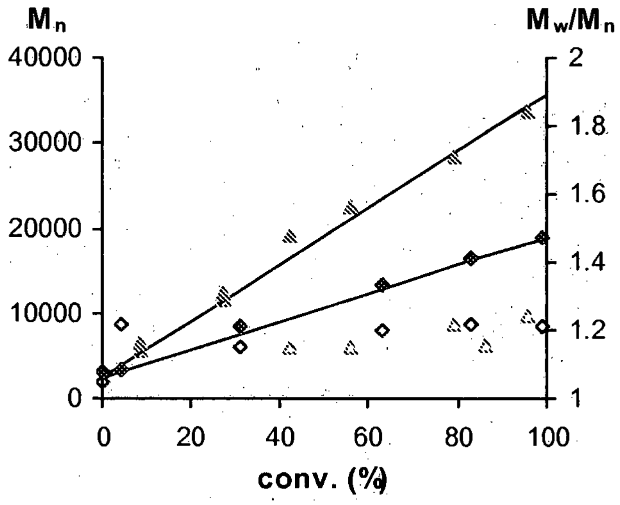

**Figure 7**

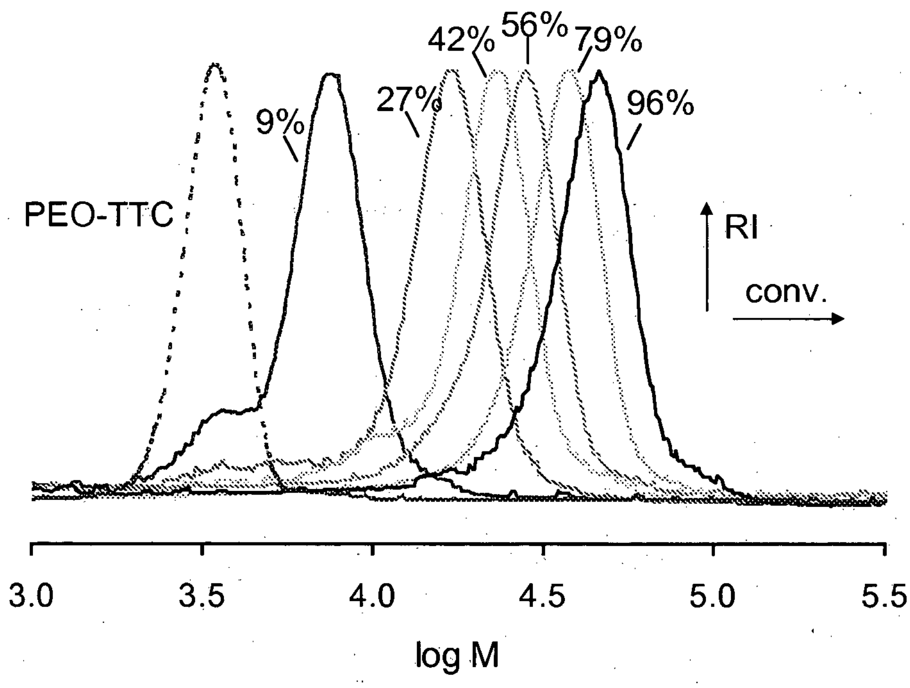


**Figure 8**

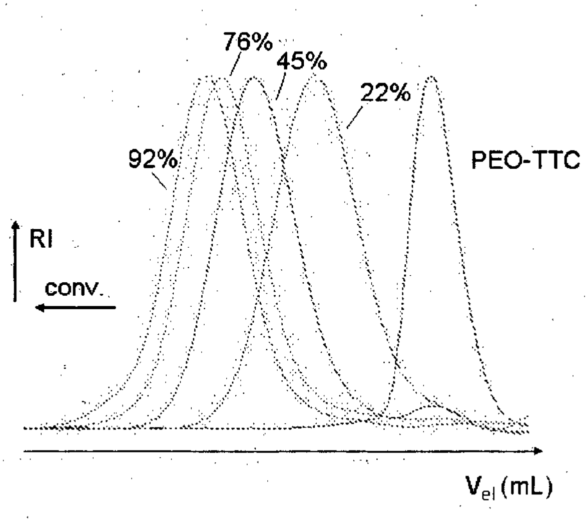

## Figure 9

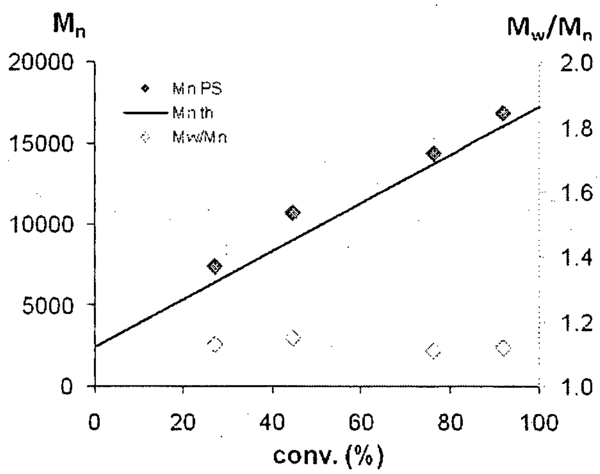

$M_n$
$M_w/M_n$
20000
15000
10000
5000
0
2.0
1.8
1.6
1.4
1.2
1.0
Mn PS
Mn th
Mw/Mn
0
20
40
60
80
100
conv. (%)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20040103732 A
- US 20060223936 A


### Littérature non-brevet citée dans la description


- **FERGUSON et al.** *Macromolecules,* 2005, vol. 28 (6), 2191-2204
- **A. MARTINS DOS SANTOS et al.** *Macromol. Rapid Comm.,* 2007, vol. 28, 1325-1332
- **M. MANGUIAN et al.** *Macromol. Rapid Commun.,* 2006, vol. 27, 399-404
- **LAI, J. T. ; FILLA, D. ; SHEA, R.** *Macromolecules,* 2002, vol. 35, 6754-6756
- **MITSUKAMI, Y. ; DONOVAN, M. S. ; LOWE, A. B. ; MCCORMICK, C. L.** *Macromolecules,* 2001, vol. 34, 2248-2256